# EUROPÄISCHE PATENTSCHRIFT

(11) **EP 4 083 663 B1**
(45) Veröffentlichungstag und Bekanntmachung des Hinweises auf die Patenterteilung: **05.06.2024**
(21) Anmeldenummer: 21171125.4
(22) Anmeldetag: 29.04.2021
(51) Int. Cl.: G01V 3/10

(54) **SENSORANORDNUNG ZUM ERFASSEN EINES ABSTANDS EINES OBJEKTS VON EINER REFERENZEBENE**
SENSOR ARRANGEMENT FOR DETECTING A DISTANCE OF AN OBJECT FROM A REFERENCE PLANE
CAPTEUR POUR DÉTECTER UNE DISTANCE ENTRE UN OBJET ET UN PLAN DE RÉFÉRENCE

(43) Veröffentlichungstag der Anmeldung: 02.11.2022
(73) Patentinhaber: Dr. Johannes Heidenhain GmbH, 83301 Traunreut (DE)
(72) Erfinder: HEUMANN, Martin, 83278 Traunstein (DE); HOLZAPFEL, Wolfgang, 83119 Obing (DE); TIEMANN, Marc Oliver, 83329 Waging am See (DE)

(56) Entgegenhaltungen:
- DE-B3- 10 318 350
- DE-B4- 10 350 733
- US-A- 4 810 966
- US-A1- 2015 002 157

## Beschreibung

### GEBIET DER TECHNIK

Die vorliegende Erfindung betrifft eine Sensoranordnung zum Erfassen eines Abstands eines Objekts von einer Referenzebene nach dem Oberbegriff des Anspruchs 1.

### STAND DER TECHNIK

Eine gattungsgemäße Sensoranordnung ist aus DE 103 50 733 B4 bekannt. Die Sensoranordnung umfasst eine zu einer Sendespule in Reihe geschaltete Kompensationsspule und eine zwei in Reihe geschaltete Spulen umfassende Empfangsspulenanordnung. Die Sendespule sendet ein Erregerfeld zum Induzieren von Wirbelströmen in einem in die Nähe der Sensoranordnung gebrachten metallischen Auslöser, welche Wirbelströme ein in zumindest der ersten Spule der Empfangsspulenanordnung eine Spannung induzierendes Wirbelstromfeld erzeugen. Die Sendespule und die erste Spule der Empfangsspulenanordnung sind ein erstes Spulenpaar bildend koaxial und dicht benachbart angeordnet, und die Kompensationsspule und die zweite Spule der Empfangsspulenanordnung sind ein zweites Spulenpaar bildend koaxial zueinander und dicht benachbart angeordnet. Die Spulen der Empfangsspulenanordnung sind so angeordnet und geschaltet, dass das Erregerfeld dort eine Differenzspannung erzeugt, und die zweite Spule der Empfangsspulenanordnung ist zusammen mit der Kompensationsspule vom Wirbelstromfeld nahezu unbeeinflussbar angeordnet.

Weitere Sensoranordnungen mit einer Spulenelementanordnung sind aus DE 10 2013 226 203 A1 und DE 10 2013 222 936 A1 sowie DE 103 18 350 B3, US 2015/002157 A1 und US 4 810 966 A bekannt.

### ZUSAMMENFASSUNG DER ERFINDUNG

Der vorliegenden Erfindung liegt die Aufgabe zugrunde, eine Sensoranordnung zum Erfassen von magnetischen Wechselfeldern, die einerseits von einem Abstand eines Objekts von einer Referenzebene abhängig oder andererseits vom Abstand unabhängig sind, anzugeben, die einfach und kompakt aufgebaut ist und mit der eine präzise Detektion des Objekts ermöglicht wird.

Diese Aufgabe wird erfindungsgemäß durch eine Sensoranordnung mit den Merkmalen des Anspruchs 1 oder 12 gelöst.

Die erfindungsgemäß ausgebildete Sensoranordnung dient zum Erfassen von magnetischen Wechselfeldern, die einerseits von einem Abstand eines Objekts von einer Referenzebene abhängig oder andererseits vom Abstand unabhängig sind. Die Sensoranordnung umfasst einen Träger und eine Spulenelementanordnung mit mindestens einem ersten Spulenelement zum Erzeugen eines Erregerfelds, einem zweiten Spulenelement zum Erfassen eines durch das erste Spulenelement erzeugten und vom Abstand abhängigen magnetischen Wechselfelds und einem dritten Spulenelement zum Erfassen des durch das erste oder ein weiteres Spulenelement erzeugten magnetischen Wechselfelds. Die Spulenelementanordnung umfasst ein viertes Spulenelement zum Erfassen des durch das erste oder weitere Spulenelement erzeugten und vom Abstand unabhängigen magnetischen Wechselfelds.

Das zweite Spulenelement und das dritte Spulenelement sind in Reihe geschaltet.

Das zweite Spulenelement und das dritte Spulenelement sind dazu ausgebildet, ein vom Abstand abhängiges erstes Messsignal zu erzeugen. Das vierte Spulenelement ist dazu ausgebildet, ein vom Abstand unabhängiges zweites Messsignal zu erzeugen.

Das erste Messsignal kann auch als Offset-korrigiertes Signal bezeichnet werden, und das zweite Messsignal kann auch als Referenzsignal bezeichnet werden. Beispielsweise entspricht das erste Messsignal einer Kennlinie des zweiten Spulenelements (Empfangsspule), die um einen (negativen) Versatz (d. h. Offset) verschoben wurde. Das zweite Messsignal entspricht beispielsweise einem Spannungssignal mit einer konstanten Amplitude, die vom vierten Spulenelement erzeugt bzw. bereitgestellt wird.

Es ist vorteilhaft, wenn das dritte Spulenelement dazu ausgebildet ist, ein drittes Messsignal zu erzeugen und wenn das dritte Spulenelement und das vierte Spulenelement derart ausgebildet sind, dass eine erste Signalstärke eines Messsignals des vierten Spulenelements (Referenzsignal) kleiner oder gleich einer zweiten Signalstärke des dritten Messsignals ist, wobei vorzugsweise die erste Signalstärke weniger als 25 % oder weniger als 10 % der zweiten Signalstärke beträgt.

Ferner ist es vorteilhaft, wenn das zweite Spulenelement dazu ausgebildet ist, ein viertes Messsignal zu erzeugen und wenn das zweite Spulenelement und das dritte Spulenelement derart ausgebildet sind, dass eine Signalstärke des vierten Messsignals stärker vom Abstand abhängig ist als die zweite Signalstärke.

Das vierte Spulenelement ist insbesondere derart angeordnet und ausgebildet, dass die Erfassung des magnetischen Wechselfelds durch das Objekt im Wesentlichen nicht beeinflusst wird.

Vorzugsweise ist der Träger eine Leiterplatte mit mindestens zwei Ebenen zum Tragen mehrerer Erregerwindungen und Abtastwindungen des ersten bis vierten Spulenelements.

Das Objekt ist beispielsweise eine Kugel. Die Kugel kann aus Hartmetall, vorzugsweise Wolframkarbid, gefertigt sein.

Ein Sensormodul mit der erfindungsgemäßen Sensoranordnung ist im Anspruch 11 angegeben. Das Sensormodul weist einen weiteren Träger zum Tragen der Sensoranordnung auf. Die Sensoranordnung ist mit dem weiteren Träger verbunden. Der weitere Träger ist auf einer dem Objekt abgewandten Seite der Sensoranordnung angeordnet und als eine Abschirmschicht ausgebildet.

Ein Aspekt der Erfindung betrifft die Verwendung der erfindungsgemäßen Sensoranordnung zur Erfassung des Abstands des Objekts von der Referenzebene.

Durch die Erfindung werden mit einer einfach und kompakt aufgebauten Sensoranordnung zum einen die Erzeugung bzw. Bereitstellung eines Offsetkorrigierten Signals (sogenannte Offset-Kompensation) und zum anderen eine Kompensation einer Änderung einer Eigenschaft (z. B. Frequenz oder Stärke) eines das Erregerfeld erzeugenden Erregerstroms ermöglicht. Dadurch wird eine hohe Genauigkeit der Detektion des Objekts erreicht. Die Erfindung ermöglicht insbesondere eine Kompensation einer durch eine Temperaturänderung verursachten Änderung einer Eigenschaft des Erregerstroms (sogenannte Temperaturkompensation). Hierzu kann eine Verknüpfung (z. B. Bildung des Arkustangens oder Division) des Offsetkorrigierten Signals und eines durch die Sensoranordnung erzeugten bzw. bereitgestellten Referenzsignals erfolgen.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von möglichen Ausführungsbeispielen der Erfindung in Verbindung mit den Figuren erläutert.

### KURZE BESCHREIBUNG DER ZEICHNUNGEN

Es zeigen
- Figur 1: eine Querschnittsansicht einer Sensoranordnung mit einer ersten bis vierten Ebene gemäß einem ersten Ausführungsbeispiel;
- Figur 2a: eine Draufsicht auf die erste Ebene der Sensoranordnung nach Figur 1;
- Figur 2b: eine Draufsicht auf die zweite Ebene der Sensoranordnung nach Figur 1;
- Figur 2c: eine Draufsicht auf die dritte Ebene der Sensoranordnung nach Figur 1;
- Figur 2d: eine Draufsicht auf die vierte Ebene der Sensoranordnung nach Figur 1;
- Figur 3: eine Querschnittsansicht einer Sensoranordnung mit einer ersten bis vierten Ebene gemäß einem zweiten Ausführungsbeispiel;
- Figur 4a: eine Draufsicht auf die erste Ebene der Sensoranordnung nach Figur 3;
- Figur 4b: eine Draufsicht auf die zweite Ebene der Sensoranordnung nach Figur 3;
- Figur 4c: eine Draufsicht auf die dritte Ebene der Sensoranordnung nach Figur 3;
- Figur 4d: eine Draufsicht auf die vierte Ebene der Sensoranordnung nach Figur 3;
- Figur 5: eine Querschnittsansicht eines beispielhaften Sensormoduls mit der Sensoranordnung nach Figur 3;
- Figur 6a: ein Blockdiagramm einer beispielhaften Auswerteeinheit mit einer Einheit zur Durchführung einer Interpolation; und
- Figur 6b: ein Blockdiagramm einer beispielhaften Auswerteeinheit mit einer Einheit zur Durchführung einer Division.

### BESCHREIBUNG DER AUSFÜHRUNGSFORMEN

Gleiche Elemente oder funktionell gleiche Elemente sind in den Figuren mit gleichen Bezugszeichen versehen.

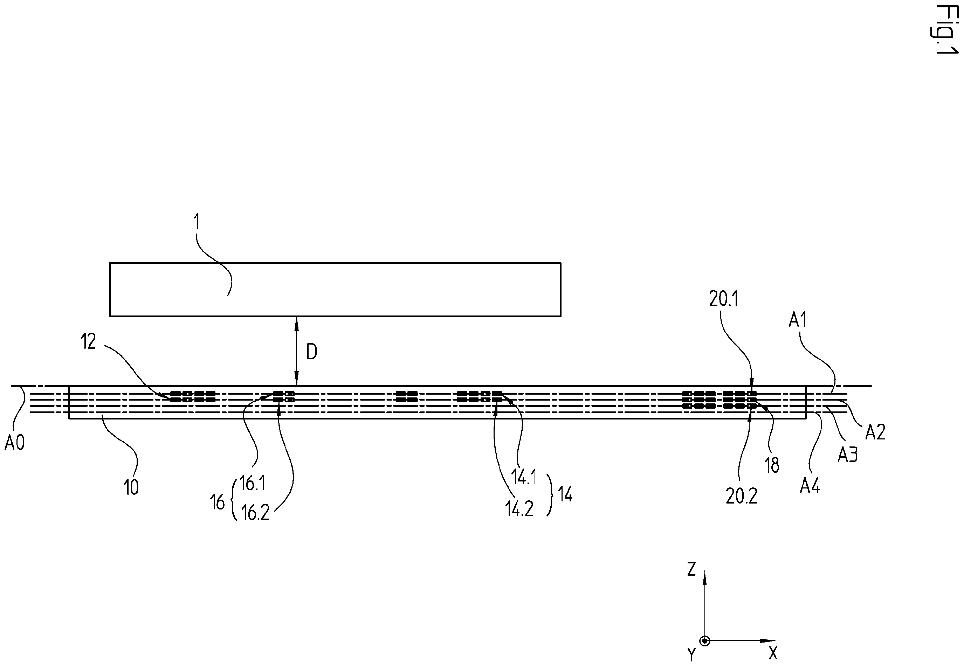

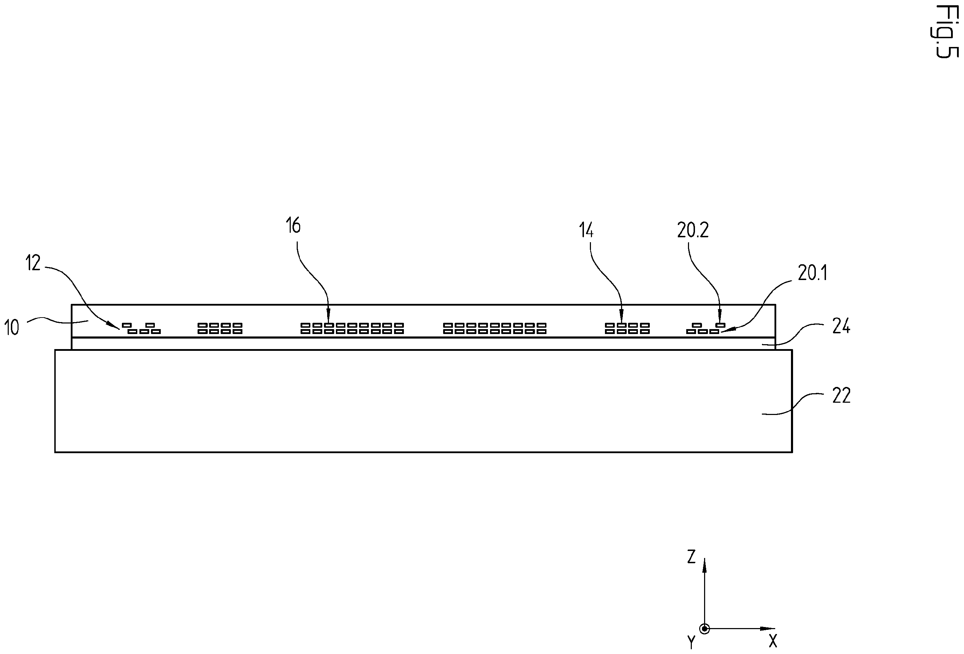

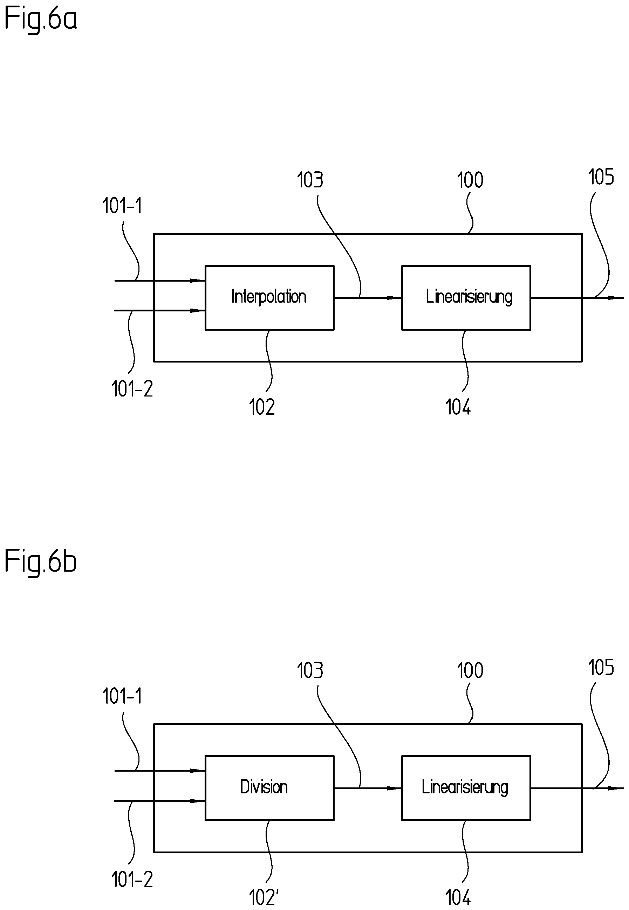

Ein erstes und zweites Ausführungsbeispiel werden nachfolgend anhand der Figuren 1 und 2a bis 2d bzw. 3 und 4a bis 4d erläutert. Ein beispielhaftes Sensormodul wird anhand von Figur 5 erläutert. In den Figuren 6a und 6b sind beispielhafte Auswerteeinheiten gezeigt.

Die Sensoranordnung gemäß dem ersten Ausführungsbeispiel dient zum Erfassen eines Abstands D eines flächig ausgedehnten Objekts 1 von einer Referenzebene A0. Die Sensoranordnung nach Figur 1 umfasst einen Träger 10 und eine Spulenelementanordnung 12. Die Spulenelementanordnung 12 umfasst ein erstes Spulenelement 14 zum Erzeugen eines Erregerfelds, ein zweites Spulenelement 16 zum Erfassen eines durch das erste Spulenelement 14 erzeugten und vom Abstand D abhängigen magnetischen Wechselfelds und ein drittes Spulenelement 20.1 zum Erfassen des durch ein weiteres Spulenelement 18 erzeugten magnetischen Wechselfelds. Ferner umfasst die Spulenelementanordnung 12 ein viertes Spulenelement 20.2 zum Erfassen des durch das weitere Spulenelement 18 erzeugten und vom Abstand D unabhängigen magnetischen Wechselfelds.

Das flächig ausgedehnte Objekt 1 ist beispielsweise ein quaderförmiges Objekt und erstreckt sich in einer XY-Ebene. Die Referenzebene A0 erstreckt sich parallel zur XY-Ebene (vgl. Figur 1).

Der Träger 10 umfasst eine Leiterplatte mit einer ersten bis dritten Ebene A1 bis A3 zum Tragen mehrerer Erregerwindungen und Abtastwindungen des ersten bis vierten Spulenelements 14, 16, 20.1, 20.2 und des weiteren Spulenelements 18. Ferner umfasst der Träger 10 eine vierte Ebene A4 zum Tragen von Kontakt- bzw. Verbindungsleitungen.

Wie in Figur 1 gezeigt, entspricht die Referenzebene A0 einer dem Objekt 1 zugewandten Ebene (d. h. Oberfläche) des Trägers 10.

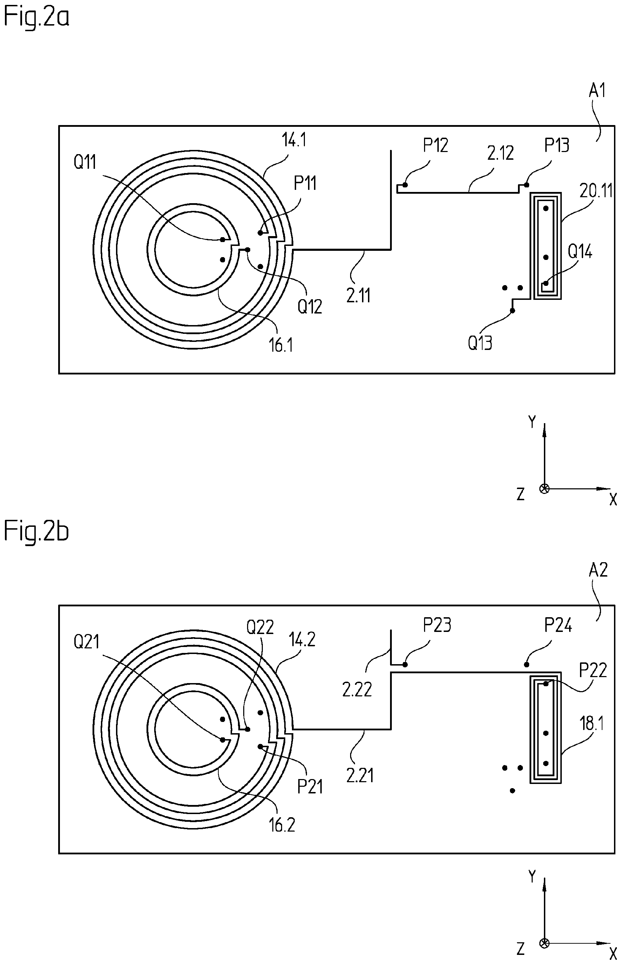

In den Figuren 2a bis 2d sind die erste bis vierte Ebene A1 bis A4 der Sensoranordnung nach Figur 1 gezeigt. Die erste bis vierte Ebene A1 bis A4 erstrecken sich jeweils parallel zur Referenzebene A0. Die Referenzebene A0 und die erste bis vierte Ebene A1 bis A4 sind in einer Richtung Z senkrecht zur Referenzebene A0 voneinander beabstandet angeordnet. Die erste bis vierte Ebene A1 bis A4 sind auf einer dem Objekt 1 abgewandten Seite der Referenzebene A0 angeordnet.

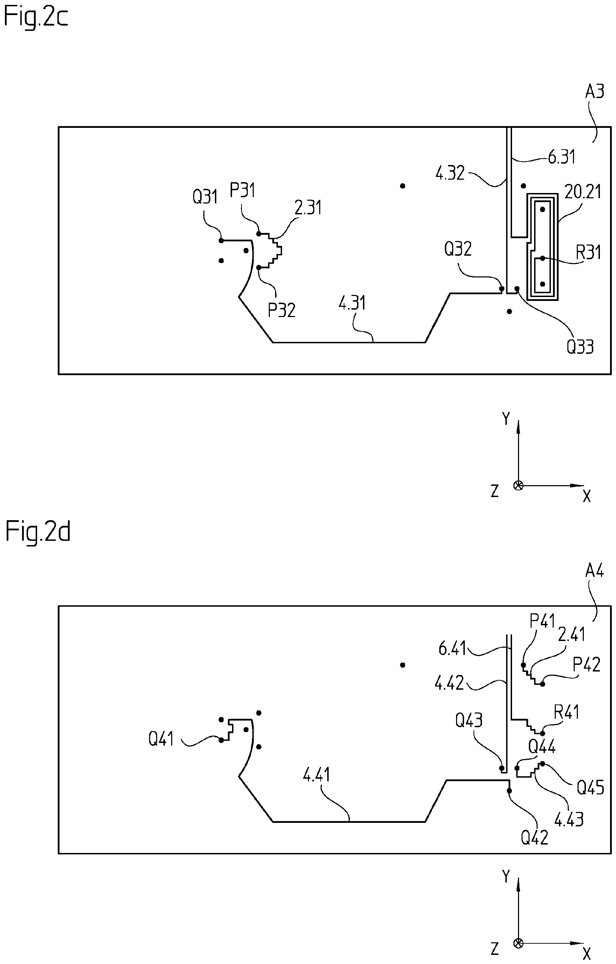

Wie in Figur 1, 2a und 2c gezeigt, umfasst das dritte Spulenelement 20.1 eine in der ersten Ebene A1 angeordnete erste Abtastwindung 20.11. Ferner umfasst das vierte Spulenelement 20.2 eine in der dritten Ebene A3 angeordnete zweite Abtastwindung 20.21. Die erste Abtastwindung 20.11 und die zweite Abtastwindung 20.21 sind (in Z-Richtung) einander gegenüberliegend angeordnet (vgl. Figur 1).

Mit Bezug auf Figur 1 und 2b umfasst das weitere Spulenelement 18 eine in der zweiten Ebene A2 angeordnete Erregerwindung (im Folgenden "dritte Erregerwindung") 18.1. Die dritte Erregerwindung 18.1 ist zwischen der ersten Abtastwindung 20.11 und der zweiten Abtastwindung 20.21 angeordnet (vgl. Figur 1). Mit Bezug auf Figur 2a und 2c sind die erste Abtastwindung 20.11 und die zweite Abtastwindung 20.21 gleich groß, d. h. sie haben in der XY-Ebene eine im Wesentlichen gleiche Ausdehnung.

Wie in Figur 1, 2a und 2b gezeigt, umfasst das erste Spulenelement 14 eine in der ersten Ebene A1 angeordnete erste Erregerwindung 14.1 und eine in der zweiten Ebene A2 angeordnete zweite Erregerwindung 14.2. Die erste Erregerwindung 14.1 und die zweite Erregerwindung 14.2 sind (in Z-Richtung) einander gegenüberliegend angeordnet (vgl. Figur 1). Ferner umfasst das zweite Spulenelement 16 eine in der ersten Ebene A1 angeordnete dritte Abtastwindung 16.1 und eine in der zweiten Ebene A2 angeordnete vierte Abtastwindung 16.2. Die dritte Abtastwindung 16.1 und die vierte Abtastwindung 16.2 sind (in Z-Richtung) einander gegenüberliegend angeordnet (vgl. wiederum Figur 1).

Wie in den Draufsichten von Figur 2a und 2b gezeigt, sind die erste und zweite Erregerwindung 14.1, 14.2 und die dritte und vierte Abtastwindung 16.1, 16.2 jeweils kreisförmig ausgebildet. Ferner ist in den Draufsichten von Figur 2a bis 2c gezeigt, dass die dritte Erregerwindung 18.1 und die erste und zweite Abtastwindung 20.11, 20.21 jeweils rechteckig ausgebildet sind. Die erste und zweite Erregerwindung 14.1, 14.2 haben einen gleichen Drehsinn, und die dritte und vierte Abtastwindung 16.1, 16.2 haben einen gleichen Drehsinn.

In den Figuren 2a bis 2d sind jeweils Knoten (d. h. Anschlüsse) und Leitungen (d. h. Kontakt- bzw. Verbindungsleitungen) einer Schaltungsstruktur dargestellt.

Wie in Figur 2a gezeigt, enthält die erste Ebene A1 Knoten P11, P12, P13 und Leitungen 2.11, 2.12. Die erste Erregerwindung 14.1 ist mit dem Knoten P11 und der Leitung 2.11 verbunden. Die Leitung 2.12 ist mit den Knoten P12, P13 verbunden. Ferner enthält die erste Ebene A1 Knoten Q11, Q12. Die dritte Abtastwindung 16.1 ist mit den Knoten Q11, Q12 verbunden. Die erste Ebene A1 enthält zudem Knoten Q13, Q14. Die erste Abtastwindung 20.11 ist mit den Knoten Q13, Q14 verbunden.

Wie in Figur 2b gezeigt, enthält die zweite Ebene A2 Knoten P21, P22, P23, P24 und Leitungen 2.21, 2.22. Die zweite Erregerwindung 14.2 ist mit den Knoten P21 und der Leitung 2.21 verbunden. Die dritte Erregerwindung 18.1 ist mit der Leitung 2.21 und dem Knoten P22 verbunden. Die Leitung 2.22 ist mit dem Knoten P23 verbunden. Ferner enthält die zweite Ebene A2 Knoten Q21, Q22. Die vierte Abtastwindung 16.2 ist mit den Knoten Q21, Q22 verbunden.

Wie in Figur 2c gezeigt, enthält die dritte Ebene A3 Knoten P31, P32 und eine Leitung 2.31. Die Leitung 2.31 ist mit den Knoten P31, P32 verbunden. Ferner enthält die dritte Ebene A3 Knoten Q31, Q32, Q33 und Leitungen 4.31, 4.32. Die Leitung 4.31 ist mit den Knoten Q31, Q32 verbunden. Die Leitung 4.32 ist mit dem Knoten Q33 verbunden. Die dritte Ebene A3 enthält zudem einen Knoten R31 und eine Leitung 6.31. Die zweite Abtastwindung 20.21 ist mit dem Knoten R31 und der Leitung 6.31 verbunden.

Wie in Figur 2d gezeigt, enthält die vierte Ebene A4 Knoten P41, P42 und eine Leitung 2.41. Die Leitung 2.41 ist mit den Knoten P41, P42 verbunden. Ferner enthält die vierte Ebene A4 Knoten Q41, Q42, Q43, Q44, Q45 und Leitungen 4.41, 4.42, 4.43. Die Leitung 4.41 ist mit den Knoten Q41, Q42 verbunden. Die Leitung 4.42 ist mit dem Knoten Q43 verbunden. Die Leitung 4.43 ist mit den Knoten Q44, Q45 verbunden. Die vierte Ebene A4 enthält zudem einen Knoten R41 und eine Leitung 6.41. Die Leitung 6.41 ist mit dem Knoten R41 verbunden.

In der Schaltungsstruktur nach Figur 2a bis 2d sind mehrere Elemente, d. h. Erreger- bzw. Abtastwindungen, über die Leitungen und Knoten (sowie Durchkontaktierungen) miteinander verbunden. Insbesondere bilden die Elemente 14.1, 2.11, 2.12; 14.2, 2.21, 2.22, 18.1; 2.31; 2.41 eine (erste) Leitung, d. h. durch alle Elemente 14.1, 2.11, 2.12; 14.2, 2.21, 2.22, 18.1; 2.31; 2.41 fließt der gleiche (erste) Strom. Ferner bilden die Elemente 16.1, 20.11; 16.2; 4.31, 4.32; 4.41, 4.42, 4.43 eine (zweite) Leitung, d. h. durch alle Elemente 16.1, 20.11; 16.2; 4.31, 4.32; 4.41, 4.42, 4.43 fließt der gleiche (zweite) Strom. Zudem bilden die Elemente 20.21, 6.31; 6.41 eine (dritte) Leitung, d. h. durch alle Elemente 20.21, 6.31; 6.41 fließt der gleiche (dritte) Strom.

Mit Bezug auf Figur 1 sind das zweite Spulenelement 16 und das dritte Spulenelement 20.1 (bzw. das erste Spulenelement 14 und das weitere Spulenelement 18) somit in Reihe geschaltet. Das dritte Spulenelement 20.1 ist in einer X-Richtung (d. h. Längsrichtung des Trägers 10) derart entfernt vom Objekt 1 angeordnet, dass es vom durch das erste Spulenelement 14 erzeugten magnetischen Wechselfeld im Wesentlichen nicht beeinflusst ist. Dasselbe gilt auch für das vierte Spulenelement 20.2.

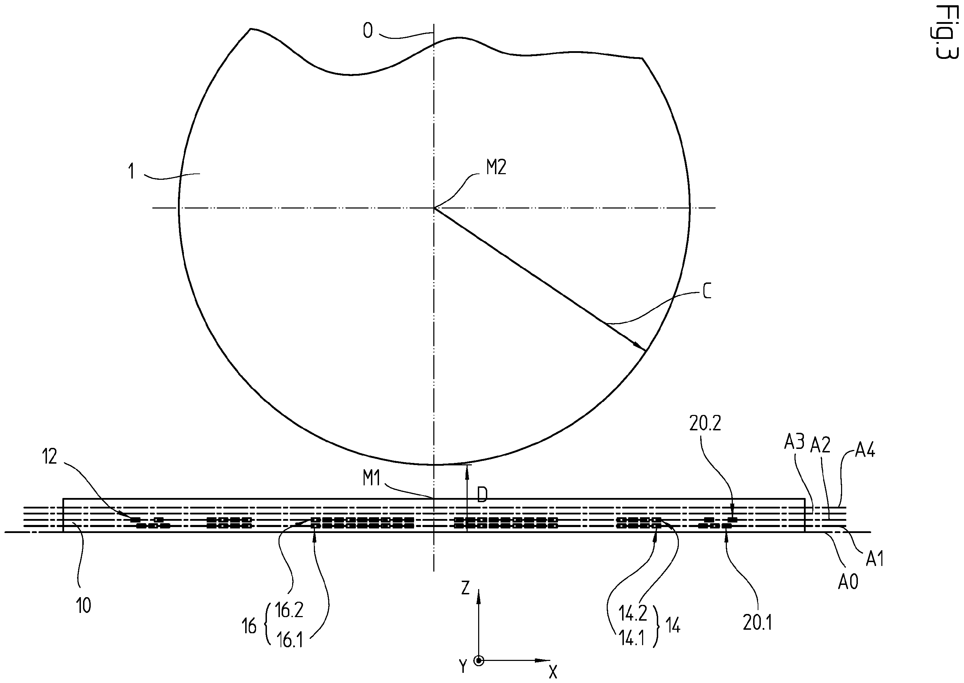

Die Sensoranordnung gemäß dem zweiten Ausführungsbeispiel dient zum Erfassen des Abstands D des als Kugel ausgebildeten Objekts 1 von der Referenzebene A0. Die Referenzebene A0 erstreckt sich wiederum parallel zur XY-Ebene (vgl. Figur 3). Die Sensoranordnung nach Figur 3 umfasst den Träger 10 (d. h. Leiterplatte) und die Spulenelementanordnung 12. Die Spulenelementanordnung 12 umfasst das erste Spulenelement 14 zum Erzeugen des Erregerfelds, das zweite Spulenelement 16 zum Erfassen des durch das erste Spulenelement 14 erzeugten und vom Abstand D abhängigen magnetischen Wechselfelds und das dritte Spulenelement 20.1 zum Erfassen des durch das erste Spulenelement 14 erzeugten magnetischen Wechselfelds. Ferner umfasst die Spulenelementanordnung 12 das vierte Spulenelement 20.2 zum Erfassen des durch das erste Spulenelement 14 erzeugten und vom Abstand D unabhängigen magnetischen Wechselfelds.

Im Gegensatz zum ersten Ausführungsbeispiel entspricht die Referenzebene A0 einer dem Objekt 1 abgewandten Ebene (d. h. Oberfläche) des Trägers 10.

Der Träger 10 umfasst die erste und zweite Ebene A1, A2 zum Tragen mehrerer Erregerwindungen und Abtastwindungen des ersten bis vierten Spulenelements 14, 16, 20.1, 20.2. Die dritte und vierte Ebene A3, A4 dienen zum Tragen von Kontakt- bzw. Verbindungsleitungen. Im Gegensatz zum ersten Ausführungsbeispiel sind die erste bis vierte Ebene A1 bis A4 auf einer dem Objekt 1 zugewandten Seite der Referenzebene A0 angeordnet.

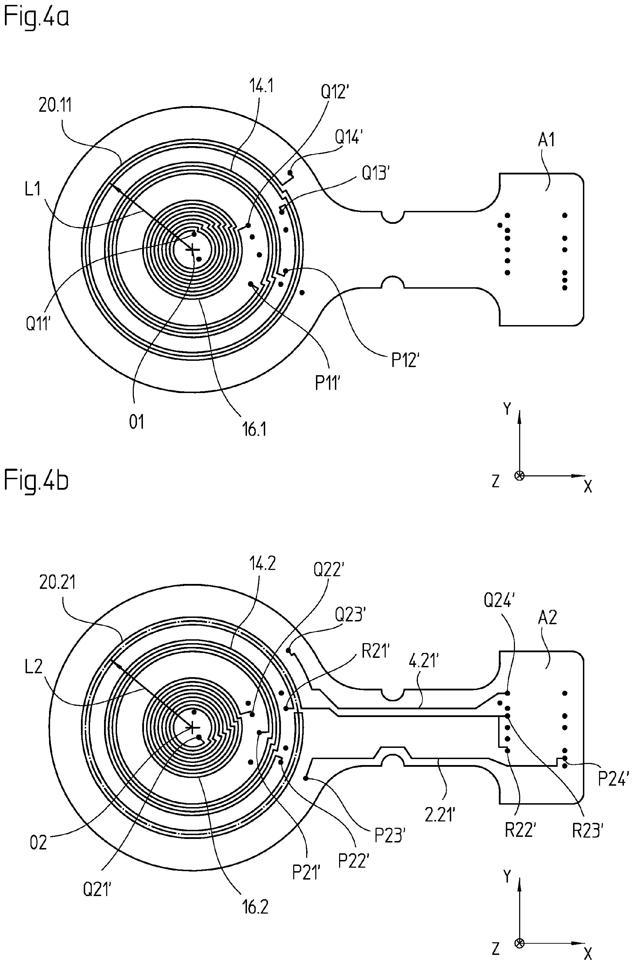

Wie in Figur 3, 4a und 4b gezeigt, umfasst das dritte Spulenelement 20.1 eine in der ersten Ebene A1 angeordnete erste Abtastwindung 20.11. Ferner umfasst das vierte Spulenelement 20.2 eine in der zweiten Ebene A2 angeordnete zweite Abtastwindung 20.21. Die erste Abtastwindung 20.11 und die zweite Abtastwindung 20.21 sind (in Z-Richtung) im Wesentlichen einander gegenüberliegend angeordnet (vgl. Figur 3).

Wie in Figur 3, 4a und 4b gezeigt, umfasst das erste Spulenelement 14 eine in der ersten Ebene A1 angeordnete erste Erregerwindung 14.1 und eine in der zweiten Ebene A2 angeordnete zweite Erregerwindung 14.2. Die erste Erregerwindung 14.1 und die zweite Erregerwindung 14.2 sind (in Z-Richtung) einander gegenüberliegend angeordnet (vgl. Figur 3). Ferner umfasst das zweite Spulenelement 16 eine in der ersten Ebene A1 angeordnete dritte Abtastwindung 16.1 und eine in der zweiten Ebene A2 angeordnete vierte Abtastwindung 16.2. Die dritte Abtastwindung 16.1 und die vierte Abtastwindung 16.2 sind (in Z-Richtung) einander gegenüberliegend angeordnet (vgl. wiederum Figur 3).

Mit Bezug auf Figur 4a und 4b umfasst die Spulenelementanordnung 12 somit eine in der ersten (gemeinsamen) Ebene A1 angeordnete Erregerwindung 14.1 und zwei Abtastwindungen 16.1, 20.11 bzw. eine in der zweiten (gemeinsamen) Ebene A2 angeordnete Erregerwindung 14.2 und zwei Abtastwindungen 16.2, 20.21. Wie in Figur 3 und 4a gezeigt, umfasst das erste Spulenelement 14 die in der ersten (gemeinsamen) Ebene A1 angeordnete Erregerwindung 14.1, und das zweite und dritte Spulenelement 16, 20.1 umfassen die beiden Abtastwindungen 16.1, 20.11. Diese Erregerwindung 14.1 und diese beiden Abtastwindungen 16.1, 20.11 sind konzentrisch zueinander angeordnet (vgl. Figur 4a). Wie in Figur 3 und 4b gezeigt, umfasst das erste Spulenelement 14 die in der zweiten (gemeinsamen) Ebene A2 angeordnete Erregerwindung 14.2, und das zweite und vierte Spulenelement 16, 20.2 umfassen die beiden Abtastwindungen 16.2, 20.21. Diese Erregerwindung 14.2 und diese beiden Abtastwindungen 16.2, 20.21 sind konzentrisch zueinander angeordnet (vgl. Figur 4b).

Mit Bezug auf Figur 4a und 4b sind jeweils eine dieser beiden Abtastwindungen 16.1, 20.11 bzw. 16.2, 20.21 innerhalb dieser Erregerwindung 14.1 bzw. 14.2 und die andere dieser beiden Abtastwindungen 16.1, 20.11 bzw. 16.2, 20.21 außerhalb dieser Erregerwindung 14.1 bzw. 14.2 angeordnet.

In den Figuren 4a bis 4d sind die Elemente (d. h. Erreger- bzw. Abtastwindungen), Knoten und Leitungen einer Schaltungsstruktur der Sensoranordnung nach Figur 3 dargestellt.

Die erste Ebene A1 (vgl. Figur 4a) enthält Knoten P11', P12`. Das Element 14.1 ist mit den Knoten P11', P12` verbunden. Ferner enthält die erste Ebene A1 Knoten Q11`, Q12`, Q13`, Q14`. Das Element 16.1 ist mit den Knoten Q11', Q12' verbunden. Das Element 20.11 ist mit den Knoten Q13', Q14' verbunden.

Die zweite Ebene A2 (vgl. Figur 4b) enthält Knoten P21', P22', P23', P24' und eine Leitung 2.21'. Das Element 14.2 ist mit den Knoten P21', P22' verbunden. Die Leitung 2.21' ist mit den Knoten P23', P24' verbunden. Ferner enthält die zweite Ebene A2 Knoten Q21', Q22', Q23', Q24' und eine Leitung 4.21'. Das Element 16.2 ist mit den Knoten Q21', Q22' verbunden. Die Leitung 4.21' ist mit den Knoten Q23', Q24' verbunden. Die zweite Ebene A2 enthält zudem Knoten R21', R22', R23'. Das Element 20.21 ist mit den Knoten R21', R22', R23' verbunden.

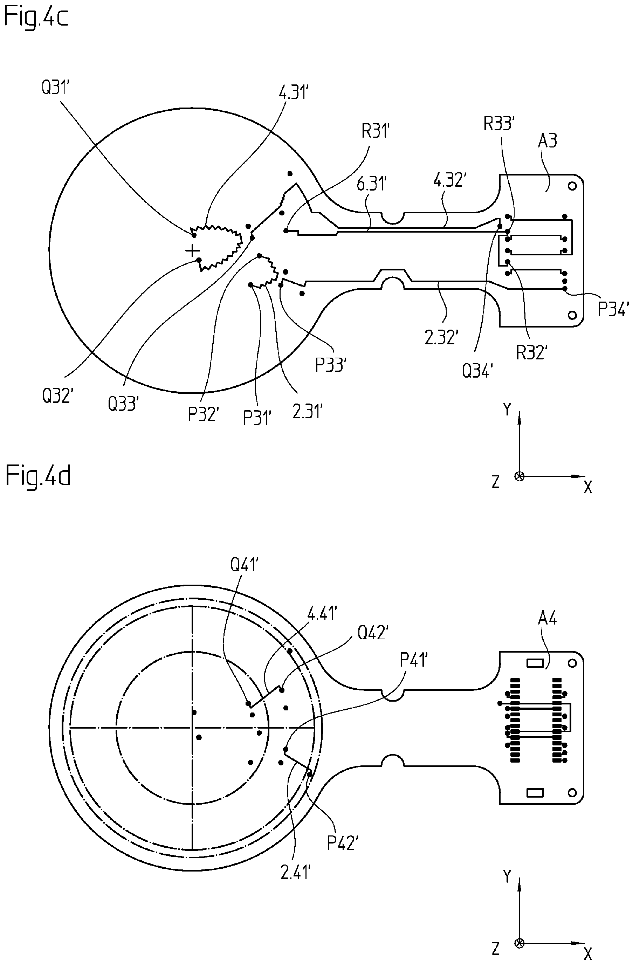

Die dritte Ebene A3 (vgl. Figur 4c) enthält Knoten P31', P32', P33', P34' und Leitungen 2.31', 2.32'. Die Leitung 2.31' ist mit den Knoten P31', P32' verbunden. Die Leitung 2.32' ist mit den Knoten P33', P34' verbunden. Ferner enthält die dritte Ebene A3 Knoten Q31', Q32', Q33', Q34' und Leitungen 4.31', 4.32'. Die Leitung 4.31' ist mit den Knoten Q31', Q32' verbunden. Die Leitung 4.32' ist mit den Knoten Q33', Q34' verbunden. Die dritte Ebene A3 enthält zudem Knoten R31', R32', R33' und eine Leitung 6.31'. Die Leitung 6.31' ist mit den Knoten R31', R32', R33' verbunden.

Die vierte Ebene A4 (vgl. Figur 4d) enthält Knoten P41', P42' und eine Leitung 2.41'. Die Leitung 2.41' ist mit den Knoten P41', P42` verbunden. Ferner enthält die vierte Ebene A4 Knoten Q41', Q42' und eine Leitung 4.41'. Die Leitung 4.41' ist mit den Knoten Q41', Q42' verbunden.

In der Schaltungsstruktur nach Figur 4a bis 4d sind die Elemente, d. h. Erreger- bzw. Abtastwindungen, wiederum über die Leitungen und Knoten (sowie Durchkontaktierungen) miteinander verbunden. Insbesondere bilden die Elemente 14.1; 14.2, 2.21'; 2.31', 2.32'; 2.41' eine (erste) Leitung. Ferner bilden die Elemente 20.11, 16.1; 16.2, 4.21'; 4.31', 4.32'; 4.41' eine (zweite) Leitung. Zudem bilden die Elemente 20.21; 6.31' eine (dritte) Leitung.

Mit Bezug auf Figur 3 sind (analog zum ersten Ausführungsbeispiel) das zweite Spulenelement 16 und das dritte Spulenelement 20.1 somit in Reihe geschaltet.

In den Figuren 4a und 4b ist gezeigt, dass die erste und zweite Erregerwindung 14.1, 14.2 einen gleichen Drehsinn haben. Ferner ist in den Figuren 4a und 4b gezeigt, dass die dritte und vierte Abtastwindung 16.1, 16.2 einen gleichen Drehsinn haben. Gemäß Figur 4a hat die erste Abtastwindung 20.11 einen ersten (einzigen) Drehsinn, d. h. alle kreisförmigen Abschnitte der ersten Abtastwindung 20.11 haben einen gleichen Drehsinn, während gemäß Figur 4b die zweite Abtastwindung 20.21 einen ersten und einen zweiten, unterschiedlichen Drehsinn hat, d. h. die beiden kreisförmigen Abschnitte der zweiten Abtastwindung 20.21 haben einen unterschiedlichen Drehsinn. Ferner hat gemäß Figur 4a die erste Abtastwindung 20.11 drei kreisförmige Abschnitte, während gemäß Figur 4b die zweite Abtastwindung 20.21 nur zwei kreisförmige Abschnitte hat.

Beim zweiten Ausführungsbeispiel ist das Objekt 1 eine Kugel mit einem Radius C. Bezug nehmend auf Figur 3, 4a und 4b ist dieser Radius C der Kugel mindestens halb so groß und höchstens dreimal so groß wie ein Abstand L1, L2 der ersten bzw. zweiten Abtastwindung 20.11, 20.21 von einem auf einer Referenzachse O liegenden Referenzpunkt O1, O2. Wie in Figur 3 gezeigt, verläuft die Referenzachse O senkrecht zur Referenzebene A0 durch einen Mittelpunkt M1 der Sensoranordnung und durch einen Mittelpunkt M2 der Kugel. Mit anderen Worten ist der Durchmesser der Kugel mindestens halb so groß wie der Durchmesser der ersten bzw. zweiten Abtastwindung 20.11, 20.21 und höchstens dreimal so groß wie der Durchmesser der ersten bzw. zweiten Abtastwindung 20.11, 20.21.

Durch das zweite Ausführungsbeispiel wird insbesondere eine Abstandsmessung zu einer Kugel, die mittig zur Sensoranordnung liegt, erreicht. Dabei sind Zusatzspulen, d. h. die erste bzw. zweite Abtastwindung 20.11, 20.21, jeweils radial außerhalb der jeweiligen Erregerwindung, d. h. die erste bzw. zweite Erregerwindung 14.1, 14.2, angeordnet. Dort ist insbesondere die Zusatzspule 20.21 weitgehend unbeeinflusst vom Messobjekt (d. h. Kugel). Da beim zweiten Ausführungsbeispiel alle Erreger- bzw. Abtastwindungen in einem Bereich (in der XY-Ebene) nebeneinander liegen, ist der Aufbau (bzw. die Sensoranordnung nach Figur 3) besonders kompakt. Thermische Einflüsse wirken sich dadurch auf alle Erreger- bzw. Abtastwindungen des Aufbaus im Wesentlichen gleich aus und können somit besonders einfach kompensiert werden.

Beim zweiten Ausführungsbeispiel sind das erste und zweite Spulenelement 14, 16 in Abhängigkeit der relativen Lage des Objekts 1 dazu bzw. in Abhängigkeit des Abstands D induktiv gekoppelt. Ferner sind beim zweiten Ausführungsbeispiel das erste und dritte Spulenelement 14, 20.1 in Abhängigkeit der relativen Lage des Objekts 1 dazu bzw. in Abhängigkeit des Abstands D induktiv gekoppelt, während das erste und vierte Spulenelement 14, 20.2 unabhängig von der relativen Lage des Objekts 1 dazu bzw. unabhängig vom Abstand D induktiv gekoppelt sind. Induktiv gekoppelt bedeutet, dass das von einer Erregerwindung des jeweiligen Spulenelements erzeugte Erregerfeld im Objekt 1 Wirbelströme erzeugt, die als Gegenfeld gegen das Erregerfeld wirken. In einer Abtastwindung des jeweils zugeordneten Spulenelements wird aufgrund des resultierenden magnetischen Wechselfelds, d. h. das durch das Gegenfeld beeinflusste oder unbeeinflusste erfasste Erregerfeld, eine Spannung induziert sowie ein entsprechendes Messsignal erzeugt, die bzw. das von der relativen Lage zum Objekt 1 (bzw. vom Abstand D) abhängig oder unabhängig ist.

Beim ersten Ausführungsbeispiel sind das erste und zweite Spulenelement 14, 16 in Abhängigkeit des Abstands D induktiv gekoppelt. Ferner sind beim ersten Ausführungsbeispiel das weitere und dritte Spulenelement 18, 20.1 bzw. das weitere und vierte Spulenelement 18, 20.2 jeweils unabhängig vom Abstand D induktiv gekoppelt.

Bei einem alternativen Ausführungsbeispiel können die Erregerwindung 14.2 und die Abtastwindung 16.2 (siehe die Ebene A2 in Figur 4b) weggelassen werden. Ferner können bei diesem alternativen Ausführungsbeispiel die Abtastwindung 20.21 (siehe die Ebene A2 in Figur 4b) und die Abtastwindung 20.11 (siehe die Ebene A1 in Figur 4a) in derselben Ebene (d. h. Ebene A1) angeordnet sein. In diesem Fall ist die Abtastwindung 20.21, anstatt in der Ebene A2, zusammen mit der Abtastwindung 20.11 in der Ebene A1 angeordnet. Hierbei können die Abtastwindung 20.11 und die Abtastwindung 20.21 unterschiedliche Radien (bzw. unterschiedliche Abstände L1, L2) haben.

Figur 5 zeigt eine Querschnittsansicht eines beispielhaften Sensormoduls mit der Sensoranordnung nach Figur 3. Das Sensormodul weist zusätzlich zu dem Träger 10 einen weiteren Träger 22 zum Tragen der Sensoranordnung auf. Wie in Figur 5 gezeigt, ist die Sensoranordnung mit dem weiteren Träger 22 verbunden. Hierzu dient beispielsweise eine Klebstoffschicht 24. Die Klebstoffschicht 24 ist zwischen dem weiteren Träger 22 und der Sensoranordnung angeordnet (vgl. Figur 5). Der weitere Träger 22 ist auf einer dem Objekt 1 (in Figur 5 nicht gezeigt) abgewandten Seite der Sensoranordnung angeordnet und als eine Abschirmschicht ausgebildet.

Beispielsweise ist der weitere Träger 22 ein Substrat aus Ferritmaterial. Ferritmaterial hat eine hohe magnetische Permeabilität und ist elektrisch isolierend, wodurch die Erzeugung von störenden Wirbelströmen im weiteren Träger 22 verhindert wird. Dadurch ist die Sensoranordnung nach unten (d. h. auf einer dem Objekt 1 abgewandten Seite) abgeschirmt und erfasst nur den Abstand zum Objekt 1, das sich von oben (d. h. auf einer dem Objekt 1 zugewandten Seite) annähert.

In Bezug auf die Erläuterungen zu den beiden Ausführungsbeispielen umfasst die Spulenelementanordnung 12 mehrere in mindestens einer ersten und zweiten Ebene A1, A2 angeordnete Erregerwindungen 14.1, 14.2, 18.1 (optional) und Abtastwindungen 16.1, 16.2, 20.11, 20.21.

Bei beiden Ausführungsbeispielen kann unter einem Knoten ein Landepad für ein Via oder eine Durchkontaktierung verstanden werden. An der Stelle/Position (XY-Position) der Knoten liegen jeweils Vias oder Durchkontaktierungen für die elektrische Kontaktierung zwischen Leitungen/Windungen auf verschiedenen Ebenen (d. h. Ebene A1 bis A4). Insbesondere werden in Z-Richtung in den verschiedenen Ebenen übereinanderliegende Knoten über Vias oder Durchkontaktierungen miteinander verbunden.

Figur 6a zeigt ein Blockdiagramm einer beispielhaften Auswerteeinheit 100 mit einer Einheit 102 zur Durchführung einer Interpolation. Figur 6b zeigt ein Blockdiagramm einer beispielhaften Auswerteeinheit 100 mit einer Einheit 102' zur Durchführung einer Division. Bei beiden Ausführungsbeispielen (d. h. Sensoranordnung nach Figur 1 bzw. 3) sind das zweite Spulenelement 16 und das dritte Spulenelement 20.1 dazu ausgebildet, ein vom Abstand D abhängiges erstes Messsignal 101-1 zu erzeugen, und das vierte Spulenelement 20.2 ist dazu ausgebildet, ein vom Abstand D unabhängiges zweites Messsignal 101-2 zu erzeugen. Die in Figur 6a bzw. 6b gezeigte Auswerteeinheit 100 ist dazu ausgebildet, in Abhängigkeit des ersten und zweiten Messsignals 101-1, 101-2 den Abstand D zu ermitteln. Durch die Auswerteeinheit 100 wird ein den Abstand D angebendes Ausgangssignal 105 erzeugt. Die Auswerteeinheit 100 nach Figur 6a bzw. 6b umfasst vorzugsweise eine Einheit 104 zur Linearisierung.

Wie in Figur 6a gezeigt, ist die Einheit 102 dazu ausgebildet, in Abhängigkeit des ersten und zweiten Messsignals 101-1, 101-2 ein interpoliertes Signal 103 zu erzeugen. Durch die Einheit 104 wird auf das interpolierte Signal 103 eine Linearisierung angewendet, sodass das Ausgangssignal 105 erhalten wird.

In vorteilhafter Weise ist die Einheit 102 ein Bauteil (z. B. induktives ASIC), das in bekannten inkrementalen Positionsmesseinrichtungen zum Einsatz kommt. Beispielsweise ist die Einheit 102 dazu ausgebildet, am Eingang der Einheit 102 zwei um 90° phasenverschobene Inkrementalsignale (z. B. Sinus-Kosinus-Paar) zu empfangen und am Ausgang der Einheit 102 eine Position auszugeben. Die Funktionsweise der Einheit 102 (d. h. Interpolation) ist dabei bekannt. Mit Bezug auf Figur 6a entspricht das interpolierte Signal 103 der am Ausgang der Einheit 102 ausgegebenen Position.

Wenn die Einheit 102 (hier das vorgenannte Bauteil) das erste Messsignal 101-1 (z. B. über den Abstand im Wesentlichen lineares Signal) und das zweite Messsignal 101-2 (z. B. über den Abstand im Wesentlichen konstantes Signal) anstelle von phasenverschobenen Inkrementalsignalen (z. B. Sinus-Kosinus-Paar) empfängt, ergibt sich nach der Interpolation kein linearer Zusammenhang zwischen der Position und einem Interpolationswert (Phasensignalwert). Durch die Einheit 104 kann in diesem Fall eine Korrektur des interpolierten Signals 103 erfolgen, um einen linearen Zusammenhang zwischen der Position und dem Interpolationswert zu erhalten. Dadurch kann die Position (d. h. der Abstand D) unter Verwendung der Einheit 102 mit einer hohen Genauigkeit ermittelt werden.

Wie in Figur 6b gezeigt, ist die Einheit 102' dazu ausgebildet, in Abhängigkeit des ersten und zweiten Messsignals 101-1, 101-2 ein normiertes Signal 103 zu erzeugen. Durch die Einheit 104 wird auf das normierte Signal 103 eine Linearisierung angewendet, sodass das Ausgangssignal 105 erhalten wird.

Vorzugsweise ist die Auswerteeinheit 100 dazu ausgebildet, das erste und zweite Messsignal 101-1, 101-2 durch eine Bildung des Arkustangens (z. B. durch die Einheit 102 in Figur 6a) oder eine Division (z. B. durch die Einheit 102' in Figur 6b) zu verknüpfen, um den Abstand D zu erhalten.

Das dritte und vierte Spulenelement 20.1, 20.2 können jeweils auch als Pickup-Spule bezeichnet werden.

Durch das dritte Spulenelement 20.1 ("Pickup-Spule 1"), das mit dem Erregerfeld gekoppelt ist, kann eine Signalveränderung bzw. Offset-Reduktion bewirkt werden. Ferner kann durch das vierte Spulenelement 20.2 ("Pickup-Spule 2") das Referenzsignal erzeugt werden, mit dessen Hilfe das Offset-korrigierte Signal normiert werden kann. Durch die Normierung können Einflüsse der Temperatur auf den Erregerstrom kompensiert werden (Temperaturkompensation). Durch die Pickup-Spule 1 und die Pickup-Spule 2 kann das Erregerfeld quasi zweimal aufgesammelt werden (wobei durch die Normierung Effekte, die sich auf das Offset-korrigierte Signal und das Referenzsignal gleichermaßen auswirken und zu entsprechenden Signalveränderungen führen, beispielsweise durch Bildung des Arkustangens eliminiert werden können und sich quasi heraus kürzen). Die Pickup-Spule 2 sollte dabei durch das Objekt 1 nicht beeinflusst werden.

Durch eine Änderung der Temperatur kann sich typischerweise unter anderem der Widerstand der Leitungen verändern und in diesem Zusammenhang auch die Frequenz des Erregerstroms. Ändert sich der Erregerstrom, so hat dies einen Einfluss auf die Stärke des Erregerfeldes und somit auch auf die induzierte Spannung in den Empfangsspulen (Abtastwindungen) und somit auf die gemessene Position (d. h. Abstand D) des Objekts 1. Durch die Erfindung wird hingegen erreicht, dass dieser Einfluss reduziert werden kann. Hierzu wird insbesondere von der vorgenannten Normierung auf den Erregerstrom Gebrauch gemacht.

Durch die vorgenannte Normierung (z. B. Bildung des Arkustangens) kann eine Temperaturkompensation ohne die Verwendung von zusätzlichen Temperatursensoren realisiert werden.

Die erfindungsgemäße Sensoranordnung kann in einem auf einer Abstandsmessung basierenden Laser-Tracker zur Bestimmung von dreidimensionalen Koordinaten im Raum eingesetzt werden.

## Patentansprüche

1. Sensoranordnung zum Erfassen von magnetischen Wechselfeldern, die einerseits von einem Abstand (D) eines Objekts (1) von einer Referenzebene (A0) abhängig oder andererseits vom Abstand (D) unabhängig sind, mit
einem Träger (10), und
einer Spulenelementanordnung (12) mit mindestens einem ersten Spulenelement (14) zum Erzeugen eines Erregerfelds, einem zweiten Spulenelement (16) zum Erfassen eines durch das erste Spulenelement (14) erzeugten und vom Abstand (D) abhängigen magnetischen Wechselfelds und einem dritten Spulenelement (20.1) zum Erfassen des durch das erste Spulenelement (14) erzeugten magnetischen Wechselfelds,
**dadurch gekennzeichnet, dass**
die Spulenelementanordnung (12) ein viertes Spulenelement (20.2) zum Erfassen des durch das erste Spulenelement (14) erzeugten und vom Abstand (D) unabhängigen magnetischen Wechselfelds umfasst,
das zweite Spulenelement (16) und das dritte Spulenelement (20.1) in Reihe geschaltet sind,
das zweite Spulenelement (16) und das dritte Spulenelement (20.1) dazu ausgebildet sind, ein vom Abstand (D) abhängiges erstes Messsignal (101-1) zu erzeugen, und
das vierte Spulenelement (20.2) dazu ausgebildet ist, ein vom Abstand (D) unabhängiges zweites Messsignal (101-2) zu erzeugen.

2. Sensoranordnung nach Anspruch 1, wobei die Sensoranordnung eine Auswerteeinheit (100) umfasst, wobei die Auswerteeinheit (100) dazu ausgebildet ist, in Abhängigkeit des ersten und zweiten Messsignals (101-1, 101-2) den Abstand (D) zu ermitteln.

3. Sensoranordnung nach Anspruch 2, wobei die Auswerteeinheit (100) dazu ausgebildet ist, das erste und zweite Messsignal (101-1, 101-2) durch eine Bildung des Arkustangens oder eine Division zu verknüpfen, um den Abstand (D) zu erhalten.

4. Sensoranordnung nach einem der vorhergehenden Ansprüche, wobei die Spulenelementanordnung (12) mehrere in mindestens einer ersten und zweiten Ebene (A1, A2) angeordnete Erregerwindungen (14.1, 14.2) und Abtastwindungen (16.1, 16.2, 20.11, 20.21) umfasst, wobei sich die erste Ebene (A1) und die zweite Ebene (A2) jeweils parallel zur Referenzebene (A0) erstrecken, wobei die erste und zweite Ebene (A1, A2) in einer Richtung (Z) senkrecht zur Referenzebene (A0) voneinander beabstandet angeordnet sind.

5. Sensoranordnung nach Anspruch 4, wobei das dritte Spulenelement (20.1) eine in der ersten Ebene (A1) angeordnete erste Abtastwindung (20.11) umfasst, wobei das vierte Spulenelement (20.2) eine in der zweiten oder einer dritten Ebene (A2, A3) angeordnete zweite Abtastwindung (20.21) umfasst, wobei sich die dritte Ebene (A3) parallel zur Referenzebene (A0) erstreckt, wobei die zweite und dritte Ebene (A2, A3) in der Richtung (Z) senkrecht zur Referenzebene (A0) voneinander beabstandet angeordnet sind, wobei die erste Abtastwindung (20.11) und die zweite Abtastwindung (20.21) einander gegenüberliegend angeordnet sind.

6. Sensoranordnung nach einem der vorhergehenden Ansprüche, wobei die Spulenelementanordnung (12) eine in einer gemeinsamen Ebene (A1, A2) angeordnete Erregerwindung (14.1, 14.2) und zwei Abtastwindungen (16.1, 20.11; 16.2, 20.21) umfasst, wobei sich die gemeinsame Ebene (A1, A2) parallel zur Referenzebene (A0) erstreckt, wobei das erste Spulenelement (14) die in der gemeinsamen Ebene (A1, A2) angeordnete Erregerwindung (14.1, 14.2) und das zweite und dritte Spulenelement (16, 20.1) oder das zweite und vierte Spulenelement (16, 20.2) die beiden Abtastwindungen (16.1, 20.11; 16.2, 20.21) umfassen, wobei diese Erregerwindung (14.1, 14.2) und diese beiden Abtastwindungen (16.1, 20.11; 16.2, 20.21) konzentrisch zueinander angeordnet sind.

7. Sensoranordnung nach Anspruch 6, wobei eine dieser beiden Abtastwindungen (16.1, 20.11; 16.2, 20.21) innerhalb dieser Erregerwindung (14.1, 14.2) und die andere dieser beiden Abtastwindungen (16.1, 20.11; 16.2, 20.21) außerhalb dieser Erregerwindung (14.1, 14.2) angeordnet sind.

8. Sensoranordnung nach einem der vorhergehenden Ansprüche, wobei das dritte Spulenelement (20.1) dazu ausgebildet ist, ein drittes Messsignal zu erzeugen, wobei das dritte Spulenelement (20.1) und das vierte Spulenelement (20.2) derart ausgebildet sind, dass eine erste Signalstärke eines Messsignals des vierten Spulenelements (20.2) kleiner oder gleich einer zweiten Signalstärke des dritten Messsignals ist, wobei vorzugsweise die erste Signalstärke weniger als 25 % oder weniger als 10 % der zweiten Signalstärke beträgt.

9. Sensoranordnung nach einem der vorhergehenden Ansprüche, wobei das Objekt (1) eine Kugel ist, wobei ein Radius (C) der Kugel mindestens halb so groß und höchstens dreimal so groß wie ein Abstand (L1, L2) einer Abtastwindung (20.11, 20.21) des dritten oder vierten Spulenelements (20.1, 20.2) von einem auf einer Referenzachse (O) liegenden Referenzpunkt (O1, O2) ist, wobei die Referenzachse (O) senkrecht zur Referenzebene (A0) durch einen Mittelpunkt (M1) der Sensoranordnung und durch einen Mittelpunkt (M2) der Kugel verläuft.

10. Sensoranordnung nach einem der vorhergehenden Ansprüche, wobei der Träger (10) eine Leiterplatte mit mindestens zwei Ebenen (A1, A2) zum Tragen mehrerer Erregerwindungen und Abtastwindungen des ersten bis vierten Spulenelements (14, 16, 20.1, 20.2) ist.

11. Sensormodul mit einer Sensoranordnung nach einem der vorhergehenden Ansprüche, wobei das Sensormodul einen weiteren Träger (22) zum Tragen der Sensoranordnung aufweist, wobei die Sensoranordnung mit dem weiteren Träger (22) verbunden ist, wobei der weitere Träger (22) auf einer dem Objekt (1) abgewandten Seite der Sensoranordnung angeordnet und als eine Abschirmschicht ausgebildet ist.

12. Sensoranordnung zum Erfassen von magnetischen Wechselfeldern, die einerseits von einem Abstand (D) eines Objekts (1) von einer Referenzebene (A0) abhängig oder andererseits vom Abstand (D) unabhängig sind, mit
einem Träger (10), und
einer Spulenelementanordnung (12) mit mindestens einem ersten Spulenelement (14) zum Erzeugen eines Erregerfelds, einem zweiten Spulenelement (16) zum Erfassen eines durch das erste Spulenelement (14) erzeugten und vom Abstand (D) abhängigen magnetischen Wechselfelds und einem dritten Spulenelement (20.1) zum Erfassen des durch ein weiteres Spulenelement (18) erzeugten magnetischen Wechselfelds,
**dadurch gekennzeichnet, dass**
die Spulenelementanordnung (12) ein viertes Spulenelement (20.2) zum Erfassen des durch das weitere Spulenelement (18) erzeugten und vom Abstand (D) unabhängigen magnetischen Wechselfelds umfasst,
das zweite Spulenelement (16) und das dritte Spulenelement (20.1) in Reihe geschaltet sind,
das zweite Spulenelement (16) und das dritte Spulenelement (20.1) dazu ausgebildet sind, ein vom Abstand (D) abhängiges erstes Messsignal (101-1) zu erzeugen, und
das vierte Spulenelement (20.2) dazu ausgebildet ist, ein vom Abstand (D) unabhängiges zweites Messsignal (101-2) zu erzeugen.

13. Sensoranordnung nach Anspruch 12, wobei das weitere Spulenelement (18) eine in der zweiten Ebene (A2) angeordnete Erregerwindung (18.1) umfasst, wobei diese Erregerwindung (18.1) zwischen der ersten Abtastwindung (20.11) und der zweiten Abtastwindung (20.21) angeordnet ist.

14. Sensoranordnung nach Anspruch 13, wobei die erste Abtastwindung (20.11) und die zweite Abtastwindung (20.21) gleich groß sind.

15. Verwendung einer Sensoranordnung nach Anspruch 1 oder 12 zur Erfassung des Abstands (D) des Objekts (1) von der Referenzebene (A0).

## Claims

1. Sensor arrangement for detecting alternating magnetic fields which on the one hand are dependent on a distance (D) between an object (1) and a reference plane (A0) or on the other hand are independent of the distance (D), having
a carrier (10), and
a coil element arrangement (12) having at least one first coil element (14) for generating an excitation field, a second coil element (16) for detecting an alternating magnetic field which is generated by the first coil element (14) and dependent on the distance (D), and a third coil element (20.1) for detecting the alternating magnetic field which is generated by the first coil element (14),
**characterized in that**
the coil element arrangement (12) comprises a fourth coil element (20.2) for detecting the alternating magnetic field which is generated by the first coil element (14) and independent of the distance (D),
the second coil element (16) and the third coil element (20.1) are connected in series,
the second coil element (16) and the third coil element (20.1) are designed to generate a first measurement signal (101-1) which is dependent on the distance (D), and
the fourth coil element (20.2) is designed to generate a second measurement signal (101-2) which is independent of the distance (D).

2. Sensor arrangement according to Claim 1, wherein the sensor arrangement comprises an evaluation unit (100), wherein the evaluation unit (100) is designed to determine the distance (D) depending on the first and second measurement signal (101-1, 101-2).

3. Sensor arrangement according to Claim 2, wherein the evaluation unit (100) is designed to link the first and second measurement signal (101-1, 101-2) by forming the arc tangent or a division in order to obtain the distance (D).

4. Sensor arrangement according to any one of the preceding claims, wherein the coil element arrangement (12) comprises a plurality of excitation windings (14.1, 14.2), which are arranged in at least one first and second plane (A1, A2), and sampling windings (16.1, 16.2, 20.11, 20.21), wherein the first plane (A1) and the second plane (A2) each extend parallel to the reference plane (A0), wherein the first and second plane (A1, A2) are arranged spaced apart from one another in a direction (Z) perpendicular to the reference plane (A0).

5. Sensor arrangement according to Claim 4, wherein the third coil element (20.1) comprises a first sampling winding (20.11) which is arranged in the first plane (A1), wherein the fourth coil element (20.2) comprises a second sampling winding (20.21) which is arranged in the second or a third plane (A2, A3), wherein the third plane (A3) extends parallel to the reference plane (A0), wherein the second and third plane (A2, A3) are arranged spaced apart from one another in the direction (Z) perpendicular to the reference plane (A0), wherein the first sampling winding (20.11) and the second sampling winding (20.21) are arranged opposite one another.

6. Sensor arrangement according to any one of the preceding claims, wherein the coil element arrangement (12) comprises one excitation winding (14.1, 14.2), which is arranged in a common plane (A1, A2), and two sampling windings (16.1, 20.11; 16.2, 20.21), wherein the common plane (A1, A2) extends parallel to the reference plane (A0), wherein the first coil element (14) comprises the excitation winding (14.1, 14.2), which is arranged in the common plane (A1, A2), and the second and third coil element (16, 20.1) or the second and fourth coil element (16, 20.2) comprise the two sampling windings (16.1, 20.11; 16.2, 20.21), wherein said excitation winding (14.1, 14.2) and said two sampling windings (16.1, 20.11; 16.2, 20.21) are arranged concentrically with respect to one another.

7. Sensor arrangement according to Claim 6, wherein one of said two sampling windings (16.1, 20.11; 16.2, 20.21) is arranged within said excitation winding (14.1, 14.2) and the other of said two sampling windings (16.1, 20.11; 16.2, 20.21) is arranged outside of said excitation winding (14.1, 14.2).

8. Sensor arrangement according to any one of the preceding claims, wherein the third coil element (20.1) is designed to generate a third measurement signal, wherein the third coil element (20.1) and the fourth coil element (20.2) are designed in such a way that a first signal strength of a measurement signal from the fourth coil element (20.2) is lower than or equal to a second signal strength of the third measurement signal, wherein the first signal strength is preferably less than 25% or less than 10% of the second signal strength.

9. Sensor arrangement according to any one of the preceding claims, wherein the object (1) is a sphere, wherein a radius (C) of the sphere is at least half as great and at most three times as great as a distance (L1, L2) between a sampling winding (20.11, 20.21) of the third or fourth coil element (20.1, 20.2) and a reference point (O1, O2) located on a reference axis (O), wherein the reference axis (O) runs perpendicular to the reference plane (A0) through a centre point (M1) of the sensor arrangement and through a centre point (M2) of the sphere.

10. Sensor arrangement according to any one of the preceding claims, wherein the carrier (10) is a printed circuit board having at least two planes (A1, A2) for carrying a plurality of excitation windings and sampling windings of the first to fourth coil element (14, 16, 20.1, 20.2).

11. Sensor module having a sensor arrangement according to any one of the preceding claims, wherein the sensor module comprises a further carrier (22) for carrying the sensor arrangement, wherein the sensor arrangement is connected to the further carrier (22), wherein the further carrier (22) is arranged on a side of the sensor arrangement remote from the object (1) and is designed as a shielding layer.

12. Sensor arrangement for detecting alternating magnetic fields which on the one hand are dependent on a distance (D) between an object (1) and a reference plane (A0) or on the other hand are independent of the distance (D), having
a carrier (10), and
a coil element arrangement (12) having at least one first coil element (14) for generating an excitation field, a second coil element (16) for detecting an alternating magnetic field which is generated by the first coil element (14) and dependent on the distance (D), and a third coil element (20.1) for detecting the alternating magnetic field which is generated by a further coil element (18),
**characterized in that**
the coil element arrangement (12) comprises a fourth coil element (20.2) for detecting the alternating magnetic field which is generated by the further coil element (18) and independent of the distance (D),
the second coil element (16) and the third coil element (20.1) are connected in series,
the second coil element (16) and the third coil element (20.1) are designed to generate a first measurement signal (101-1) which is dependent on the distance (D), and
the fourth coil element (20.2) is designed to generate a second measurement signal (101-2) which is independent of the distance (D).

13. Sensor arrangement according to Claim 12, wherein the further coil element (18) comprises an excitation winding (18.1) which is arranged in the second plane (A2), wherein said excitation winding (18.1) is arranged between the first sampling winding (20.11) and the second sampling winding (20.21).

14. Sensor arrangement according to Claim 13, wherein the first sampling winding (20.11) and the second sampling winding (20.21) are the same size.

15. Use of a sensor arrangement according to Claim 1 or 12 for detecting the distance (D) between the object (1) and the reference plane (A0).

## Revendications

1. Ensemble de capteurs destiné à détecter des champs magnétiques alternatifs qui, d'une part, dépendent d'une distance (D) d'un objet (1) à un plan de référence (A0) ou qui, d'autre part, sont indépendants de la distance (D), ledit ensemble de capteurs comprenant
un support (10), et
un ensemble d'éléments de bobine (12) comportant au moins un premier élément de bobine (14) destiné à générer un champ d'excitation, un deuxième élément de bobine (16) destiné à détecter un champ magnétique alternatif généré par le premier élément de bobine (14) et dépendant de la distance (D), et un troisième élément de bobine (20.1) destiné à détecter le champ magnétique alternatif généré par le premier élément de bobine (14),
**caractérisé en ce que**
l'ensemble d'éléments de bobine (12) comprend un quatrième élément de bobine (20.2) destiné à détecter le champ magnétique alternatif généré par le premier élément de bobine (14) et indépendant de la distance (D),
le deuxième élément de bobine (16) et le troisième élément de bobine (20.1) sont montés en série,
le deuxième élément de bobine (16) et le troisième élément de bobine (20.1) sont conçus pour générer un premier signal de mesure (101-1) qui dépend de la distance (D), et
le quatrième élément de bobine (20.2) est conçu pour générer un deuxième signal de mesure (101-2) indépendant de la distance (D).

2. Ensemble de capteurs selon la revendication 1, l'ensemble de capteurs comprenant une unité d'évaluation (100), l'unité d'évaluation (100) étant conçu pour déterminer la distance (D) en fonction des premier et deuxième signaux de mesure (101-1, 101-2).

3. Ensemble de capteurs selon la revendication 2, l'unité d'évaluation (100) étant conçue pour combiner les premier et deuxième signaux de mesure (101-1, 101-2) par formation de l'arc tangente ou par division afin d'obtenir la distance (D).

4. Ensemble de capteurs selon l'une des revendications précédentes, l'ensemble d'éléments de bobine (12) comprenant une pluralité d'enroulements d'excitation (14.1, 14.2) et d'enroulements de balayage (16.1, 16.2, 20.11, 20.21) disposés dans au moins un premier et un deuxième plan (A1, A2), le premier plan (A1) et le deuxième plan (A2) s'étendant chacun parallèlement au plan de référence (A0), le premier et le deuxième plan (A1, A2) étant disposés à distance l'un de l'autre dans une direction (Z) perpendiculaire au plan de référence (A0).

5. Ensemble de capteurs selon la revendication 4, le troisième élément de bobine (20.1) comprenant un premier enroulement de balayage (20.11) disposé dans le premier plan (A1), le quatrième élément de bobine (20.2) comprenant un deuxième enroulement de balayage (20.21) disposé dans le deuxième ou un troisième plan (A2, A3), le troisième plan (A3) s'étendant parallèlement au plan de référence (A0), le deuxième et le troisième plan (A2, A3) étant disposés à distance l'un de l'autre dans la direction (Z) perpendiculaire au plan de référence (A0), le premier enroulement de balayage (20.11) et le deuxième enroulement de balayage (20.21) étant disposés l'un en face de l'autre.

6. Ensemble de capteurs selon l'une des revendications précédentes, l'ensemble d'éléments de bobine (12) comprenant un enroulement d'excitation (14.1, 14.2) disposé dans un plan commun (A1, A2) et deux enroulements de balayage (16.1, 20.11 ; 16.2, 20.21), le plan commun (A1, A2) s'étendant parallèlement au plan de référence (A0), le premier élément de bobine (14) comprenant l'enroulement d'excitation (14.1, 14.2) disposé dans le plan commun (A1, A2) et les deuxième et troisième éléments de bobine (16, 20.1) ou les deuxième et quatrième éléments de bobine (16, 20.2) comprenant les deux enroulements de balayage (16.1, 20.11 ; 16.2, 20.21), cet enroulement d'excitation (14.1, 14.2) et ces deux enroulements de balayage (16.1, 20.11 ; 16.2, 20.21) étant disposés concentriquement l'un à l'autre.

7. Ensemble de capteurs selon la revendication 6, l'un de ces deux enroulements de balayage (16.1, 20.11 ; 16.2, 20.21) étant disposé à l'intérieur de cet enroulement d'excitation (14.1, 14.2) et l'autre de ces deux enroulements de balayage (16.1, 20.11 ; 16.2, 20.21) étant disposé à l'extérieur de cet enroulement d'excitation (14.1, 14.2).

8. Ensemble de capteurs selon l'une des revendications précédentes, le troisième élément de bobine (20.1) étant conçu pour générer un troisième signal de mesure, le troisième élément de bobine (20.1) et le quatrième élément de bobine (20.2) étant conçus de telle sorte qu'une première intensité de signal d'un signal de mesure du quatrième élément de bobine (20.2) soit inférieure ou égale à une deuxième intensité de signal du troisième signal de mesure, de préférence la première intensité du signal étant inférieure à 25 % ou inférieure à 10 % de la deuxième intensité du signal.

9. Ensemble de capteurs selon l'une des revendications précédentes, l'objet (1) étant une sphère, un rayon (C) de la sphère étant égal à au moins la moitié et au plus au triple d'une distance (L1, L2) d'un enroulement de balayage (20.11, 20.21) du troisième ou du quatrième élément de bobine (20.1, 20.2) à un point de référence (O1, O2) situé sur un axe de référence (O), l'axe de référence (O) s'étendant perpendiculairement au plan de référence (A0) passant par un point central (M1) de l'ensemble de capteurs et passant par un point central (M2) de la sphère.

10. Ensemble de capteurs selon l'une des revendications précédentes, le support (10) étant une carte de circuit imprimé comportant au moins deux plans (A1, A2) destinés à supporter une pluralité d'enroulements d'excitation et d'enroulements de balayage des premier à quatrième éléments de bobine (14, 16, 20.1, 20.2).

11. Module de capteur comprenant un ensemble de capteurs selon l'une des revendications précédentes, le module de capteurs comportant un autre support (22) destiné à porter l'ensemble de capteurs, l'ensemble de capteurs étant relié à l'autre support (22), l'autre support (22) étant disposé sur un côté de l'ensemble de capteurs qui est opposé à l'objet (1) et étant conçu comme une couche de protection.

12. Ensemble de capteurs destiné à détecter des champs magnétiques alternatifs qui, d'une part, dépendent d'une distance (D) d'un objet (1) à un plan de référence (A0) ou qui, d'autre part, sont indépendants de la distance (D), ledit ensemble de capteurs comprenant
un support (10), et
un ensemble d'éléments de bobine (12) comportant au moins un premier élément de bobine (14) destiné à générer un champ d'excitation, un deuxième élément de bobine (16) destiné à détecter un champ magnétique alternatif généré par le premier élément de bobine (14) et dépendant de la distance (D) et un troisième élément de bobine (20.1) destiné à détecter le champ magnétique alternatif généré par un autre élément de bobine (18), **caractérisé en ce que**
l'ensemble d'éléments de bobine (12) comprend un quatrième élément de bobine (20.2) destiné à détecter le champ magnétique alternatif généré par l'autre élément de bobine (18) et indépendant de la distance (D),
le deuxième élément de bobine (16) et le troisième élément de bobine (20.1) sont montés en série,
le deuxième élément de bobine (16) et le troisième élément de bobine (20.1) sont conçus pour générer un premier signal de mesure (101-1) qui dépend de la distance (D), et
le quatrième élément de bobine (20.2) est conçu pour générer un deuxième signal de mesure (101-2) indépendant de la distance (D).

13. Ensemble de capteurs selon la revendication 12, l'autre élément de bobine (18) comprenant un enroulement d'excitation (18.1) disposé dans le deuxième niveau (A2), cet enroulement d'excitation (18.1) étant disposé entre le premier enroulement de balayage (20.11) et le deuxième enroulement de balayage (20.21).

14. Ensemble de capteurs selon la revendication 13, le premier enroulement de balayage (20.11) et le deuxième enroulement de balayage (20.21) étant de même dimension.

15. Utilisation d'un ensemble de capteurs selon la revendication 1 ou 12 pour détecter la distance (D) de l'objet (1) au plan de référence (A0).
